# FASCICULE DE BREVET EUROPEEN

(11) **EP 0 845 962 B1**
(45) Date de publication et mention de la délivrance du brevet: **07.11.2001**
(21) Numéro de dépôt: 96927082.6
(22) Date de dépôt: 25.07.1996
(51) Int. Cl.: A61C 7/08

(54) **DISPOSITIF INTRABUCCAL**
INTRAORALE VORRICHTUNG
INTRAORAL DEVICE

(30) Priorité: 31.07.1995 FR 9509490
(43) Date de publication de la demande: 10.06.1998
(73) Titulaire: David, Michel, 69004 Lyon (FR); Robert, Dominique, 69300 Caluire (FR); Petitjean, Thierry, 69110 Sainte-Foy-Les-Lyon (FR)
(72) Inventeur: David, Michel, 69004 Lyon (FR); Robert, Dominique, 69300 Caluire (FR); Petitjean, Thierry, 69110 Sainte-Foy-Les-Lyon (FR)
(74) Mandataire: Gaucherand, Michel
(86) Numéro de dépôt international: FR9601175
(87) Numéro de publication internationale: WO9704716

(56) Documents cités:
- WO-A-94/23673
- US-A- 4 505 672
- US-A- 4 715 368
- US-A- 5 409 017
- US-A- 5 427 117

## Description

### Domaine technique

L'invention concerne le domaine des orthèses buccales, destinées notamment au traitement du ronflement et de l'augmentation des résistances des voies aériennes supérieures pendant le sommeil.

### Art Antérieur

De manière connue, le ronflement est la conséquence d'une hypotonie musculaire qui apparaît lors de l'endormissement. En effet, lorsque les muscles de la mâchoire sont relâchés, la mandibule a une tendance naturelle à reculer, entraînant dans son mouvement la langue vers l'arrière de la cavité buccale. Ainsi, le canal de respiration buccal diminue de calibre et provoque des turbulences du flux respiratoire, responsable des vibrations du voile du palais et des parties molles adjacentes. Cette vibration provoque le phénomène sonore bien connu du ronflement.

Dans certains cas, notamment lorsque les dimensions de la langue sont importantes, cette obstruction peut être complète, entraînant de fait des interruptions de la respiration ou apnées. Ces phénomènes entraînent une diminution de la qualité du sommeil et des réflexes neuro-végétatifs responsables d'hypertension artérielle, systémique et pulmonaire. La répétition de ces apnées se manifeste chez le patient par une fatigue au réveil et une hyper somnolence diurne. On conçoit qu'il s'agit donc là d'une véritable pathologie.

Dans certains cas, on est amené à placer les patients lors de leur sommeil sous ventilation spontanée en pression positive continue par masque nasal. Cette solution efficace présente néanmoins l'inconvénient majeur de nécessiter un appareillage spécifique particulièrement contraignant.

Une autre solution proposée pour combattre ces phénomènes d'apnée du sommeil, consiste à pratiquer une opération de résection du voile du palais. Outre le fait que cette solution constitue une opération douloureuse, elle est inconstamment efficace. De plus, elle entraîne des changements de la morphologie intra-buccale, pouvant perturber la déglutition.

On a également proposé pour combattre le ronflement, des appareillages complexes permettant l'avancée de la mâchoire inférieure par la mise en propulsion de la mandibule. Malheureusement, ces systèmes sont monoblocs et ils fonctionnent en immobilisant complètement la mandibule dans une position avancée.

On connaît notamment d'après le WO-A-94/ 23 673 un dispositif intra-buccal comportant deux coques en matière plastique thermoformée. La première de ces coques enveloppe l'arcade supérieure de la cavité buccale. La seconde de ces coques enveloppe l'arcade inférieure. Ce dispositif comprend des moyens qui agissent au niveau desdites coques et qui génèrent sur la mandibule une force propulsive orientée selon la direction de la propulsion mandibulaire et dans le sens postéro-antérieur. De plus, ces moyens permettent un degré limité de déplacement latéral de la coque enveloppant l'arcade inférieure de la mandibule par rapport à la coque enveloppant l'arcade supérieure du maxillaire.

Mais on a constaté qu'à chaque déglutition la mandibule se déplace dans le sens antéro-postérieur et ceci survient environ deux cents fois par nuit. Ce mouvement est impossible avec les systèmes d'immobilisation et le dispositif proposés, ce qui cause une gêne chez les patients ainsi équipés et peut provoquer des syndromes algodysfonctionnels de l'articulation temporo-mandibulaire.

### Brève description de l'invention

L'objet de l'invention est de proposer un appareillage permettant de maintenir la mandibule en position de propulsion, tout en autorisant des mouvements de celle-ci par rapport au maxillaire supérieur.

L'invention concerne un dispositif infra-buccal, comportant deux coques en matière plastique thermoformée, qui enveloppent respectivement la première, l'arcade supérieure, et la seconde l'arcade inférieure de la cavité buccale d'un patient et muni de moyens agissant au niveau desdites coques, propres à générer une force propulsive mandibulaire orientée selon la direction de la propulsion mandibulaire et dans le sens postéro-antérieur.

Ce dispositif se caractérise en ce qu'il autorise la rétropulsion mandibulaire.

En d'autres termes, l'invention consiste à munir lesdites coques de moyens mécaniques, qui en l'absence de toute autre contrainte, physiologique notamment, induit le déplacement de la mandibule par rapport au maxillaire en direction de l'avant.

Selon une première forme de réalisation de l'invention, ces moyens sont constitués :
- sur l'une des deux coques, à l'aplomb des prémolaires, d'un anneau dépassant du plan d'occlusion,
- et sur l'autre coque, d'une paire de bras libres dépassant du plan d'occlusion, parallèles à celui-ci, ces deux bras étant fixés sur la face linguale antérieure de la coque et dirigés suivant la direction générale de la ligne d'occlusion, ces bras étant destinés à venir s'engager et à coulisser dans lesdits anneaux, de manière à maintenir un décalage de la mandibule vers l'avant par rapport au maxillaire, tout en autorisant des mouvements de latéralité.

Autrement dit, la mandibule est maintenue en position propulsée par rapport au maxillaire supérieur par l'interaction des anneaux et des bras solidaires respectivement de la mâchoire supérieure et inférieure. Par ailleurs, le degré de liberté correspondant à la possibilité de coulissement des bras à l'intérieur des anneaux permet une certaine capacité de mouvement des deux maxillaires.

Les bras, en coopérant avec les anneaux, permettent de maintenir un décalage en avant de la mandibule par rapport au maxillaire tout en autorisant les mouvements de latéralité, la déglutition et la respiration buccale. En outre, cela autorise en occlusion de convenance en particulier pendant la déglutition, la rétropulsion mandibulaire. Enfin, ce système réduit les risques de troubles de l'articulation temporo-mandibulaire.

Pour résoudre le problème de l'enclenchement et surtout celui du désacouplement intempestif, les extrémités libres des bras sont incurvées vers l' espace vestibulaire.

En d'autres termes, les deux coques constituent des ensembles indépendants qui sont assemblés par passage des bras dans les anneaux. Grâce aux extrémités incurvées des bras, il est nécessaire de déformer légèrement les bras pour les faire rentrer dans les anneaux, ce qui empêche tous les désaccouplements intempestifs à l'intérieur de la bouche du patient.

Compte-tenu de la grande complexité de la cinématique de l'articulation temporo-mandibulaire, on a observé qu'on obtenait une plus grande latitude de mouvement lorsque chacun des anneaux a une forme elliptique et est disposé sensiblement entre la première et la deuxième prémolaire.

De la même manière, la capacité de mouvement est augmentée lorsque chaque anneau est orthogonal à la ligne d'occlusion, et donc à la direction des bras.

Comme on l'a déjà vu, le maintien en propulsion s'obtient grâce à l'effet de ressort des bras libres. C'est pourquoi, afin d'augmenter encore l'effet d'élasticité tout en améliorant la solidité de l'ensemble, les bras forment les branches d'une pièce unique en V, dirigées vers l'arrière de la bouche, dont les extrémités libres sont disposées sensiblement à l'aplomb de la première molaire.

De manière classique dans le domaine de l'orthodontie, les anneaux et les bras libres sont en acier inoxydable.

Selon une autre forme de réalisation de l'invention, les deux coques reçoivent des crochets, destinés à leur tour à recevoir des élastiques, tendant à propulser la mandibule vers l'avant. Plus précisément, les crochets de la coque inférieure sont fixés au voisinage de ses extrémités, et avantageusement au niveau de la deuxième prémolaire, alors que ceux de la coque supérieure sont fixés avantageusement à l'aplomb de chacune des zones de jonction entre les incisives centrales et latérales.

Selon une autre forme de réalisation de l'invention, la force propulsive générée est d'origine magnétique, des aimants permanents étant intégrés au niveau des coques afin de générer des forces répulsives.

Pour résoudre le problème de l'adaptation personnalisée de cet appareillage, chaque coque présente un extrados réalisé en un matériau thermoformable semi-rigide et un intrados constitué d'un matériau thermoformable plus souple. De cette manière, chaque patient peut adapter la coque à sa propre empreinte simplement en chauffant, en particulier dans l'eau bouillante, puis en l'adaptant sur chacune de ses arcades.

Comme on le voit, l'invention consiste à provoquer la propulsion de la mandibule pour prévenir le glissement de la langue en arrière. Les avantages de l'invention sont encore améliorés lorsque la coque supérieure présente à ses deux extrémités postérieures deux lobes s'étendant vers l'arrière et destinés à servir de soutènement en portion latérale du voile du palais. De cette manière, la coque supérieure a tendance à éloigner, à repousser le voile du palais pour empêcher son contact avec la langue.

De manière complémentaire, on améliore l'efficacité du dispositif si la coque inférieure présente des oreillettes disposées à proximité des extrémités libres de la coque et orientés vers l'intérieur en direction l'un de l'autre, ces oreillettes étant destinées à prendre appui sur les parties latérales de la langue pour empêcher son soulèvement. En d'autres termes, on évite ainsi la remontée de la langue inhérante à l'hypotonie musculaire. Bien entendu, ces dispositions sont particulièrement avantageuses dans le cas de patient présentant une macroglossie.

### Description sommaire des dessins

La manière dont est réalisée l'invention, ainsi que les avantages qui en découlent ressortiront mieux de la description des exemples de réalisation qui suivent, donnés à titre indicatif et non limitatif à l'appui des figures annexées.

La figure 1 est une vue en perspective sommaire représentant les deux coques constitutives d'une première forme de réalisation de l'invention en position désaccouplée.

La figure 2 est une vue de côté, montrant le dispositif en position accouplée.

Les figures 3 et 4 sont des vues respectivement de derrière et de dessus de la coque inférieure.

Les figures 5 et 6 sont des vues respectivement de derrière et de dessous de la coque supérieure.

La figure 7 est une vue en perspective sommaire éclatée d'une autre forme de réalisation de l'invention, dont la figure 8 est une vue en position accouplée.

### Modes de réalisation de l'invention

Comme déjà dit, l'objectif de l'invention est de maintenir pendant le sommeil du patient, une certaine propulsion de la mandibule vers l'avant. Ce décalage vers l'avant permet d'éloigner la partie postérieure de la langue du voile du palais, et ainsi d'éviter les risques de ronflement qui peuvent dégénérer en apnée du sommeil.

Un autre objectif combiné de l'invention est de laisser une certaine liberté de mouvements à la mandibule, afin d'autoriser la déglutition nocturne et la respiration buccale, sans trouble de l'articulation temporo-mandibulaire.

A cet effet, selon une première forme de réalisation de l'invention, le dispositif (1) comprend deux coques (2, 3), articulées et déboîtables l'une par rapport à l'autre, présentant entre elles une certaine capacité de mouvement et d'élasticité.

Tout d'abord, la coque supérieure (2) prend la forme d'une gouttière destinée à recevoir l'arcade supérieure jusqu'à la deuxième pré-molaire. Cette coque supérieure présente, de chaque côté et au niveau de l'espace entre la première et la deuxième pré-molaire, un anneau (4a, 4b) dirigé vers le bas dans l'espace inter-occlusal. L'anneau (4a, 4b) est de forme légèrement elliptique, de grand axe (5) horizontal. Le plan (6) de l'anneau est orienté de manière sensiblement perpendiculaire par rapport à la ligne occlusale (7), qui correspond à la direction d'implantation des dents.

De manière symétrique, la coque inférieure (3) forme une gouttière, destinée à envelopper l'arcade inférieure, également sensiblement jusqu'au niveau des deuxièmes pré-molaires. Cette coque inférieure (3) présente en excroissance, une pièce métallique (8) prenant la forme d'une ligne brisée symétrique par rapport au plan sagittal (10) du dispositif. Cette pièce métallique comporte une embase (11), qui est solidaire de la coque inférieure (3) au niveau de l'arrière des incisives. Cette embase (11) émerge de la coque (3) et se prolonge latéralement par une courte portion rectiligne (12a, 12b), qui elle-même se prolonge par un bras (13a, 13b) également rectiligne, mais de plus grande longueur, et se terminant à hauteur de la première molaire. Ce bras allongé se termine par une courte portion (14a, 14b) incurvée vers l'espace vestibulaire. La disposition du bras suit sensiblement la ligne d'occlusion (7).

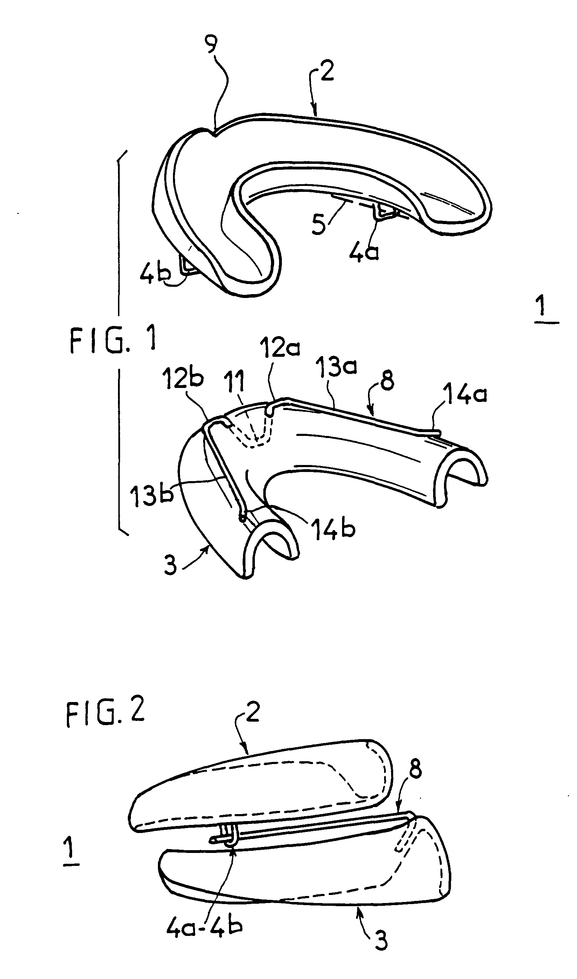

Lorsque les bras (13a, 13b) sont introduits à l'intérieur des anneaux (4a, 4b) (voir figure 2), les deux coques (2, 3) forment un ensemble articulé possédant une certaine capacité de mouvement vers l'avant comme sur les côtés. Lorsque les deux coques (2, 3) sont placées de telle manière que leurs plans sagittaux (9, 10) soient confondus, les anneaux (4a, 4b) servent de points d'articulation. Le mouvement relatif des deux coques (2, 3) correspond alors sensiblement au mouvement de basculement naturel existant entre le maxillaire supérieur et la mandibule.

Les dimensions des anneaux (4a, 4b) ainsi que la distance des bras (13a, 13b) par rapport à la coque inférieure (3), sont calculées de telle manière que la position de la mandibule soit en propulsion et en inocclusion chacune de cinq millimètres environ.

La référence (9) désigne une entaille arrondie destinée à former un repère de positionnement au niveau des freins des lèvres supérieure et inférieure.

Comme déjà dit, l'objectif de l'invention est d'augmenter l'espace oropharyngé. A cet effet, deux dispositifs supplémentaires peuvent équiper les coques.

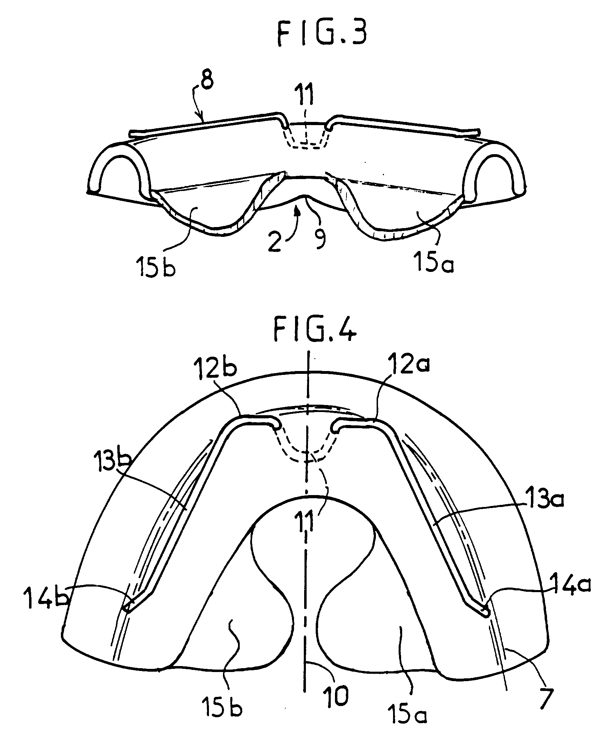

Dans une première variante, particulièrement avantageuse chez les sujets atteints d'hypertrophie de la langue, la coque inférieure (3) présente des oreillettes (15a, 15b) implantées sur la zone linguale et en direction de la langue, au niveau de la première molaire (voir figures 3 et 4). Ces oreillettes (15a, 15b), positionnées sensiblement à hauteur du collet, prennent appui sur la langue, de manière à l'abaisser et à éviter qu'elle vienne au contact du voile du palais. Bien entendu, on ne sort pas du cadre de l'invention en donnant à ces oreillettes toutes formes particulièrement anatomiques, ou si ces deux oreillettes ne forment qu'une seule pièce reliant les deux zones linguales de la coque inférieure. Dans une variante, ces oreillettes (15a,15b) peuvent être réglables en dimensions pour être ajustées.

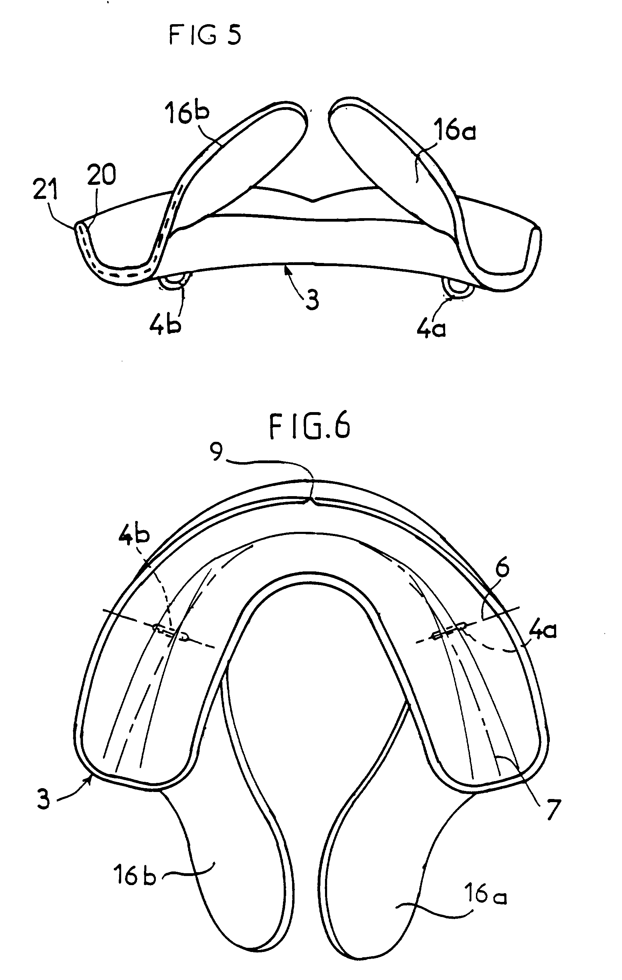

Dans une autre variante illustrée aux figures 5 et 6, la coque supérieure présente deux prolongements, par exemple en forme de lobes ou en forme d'oreilles (16a, 16b), prenant naissance à l'extrémité postérieure linguale de ladite coque. Ces deux prolongements (16a, 16b) s'étendent vers l'arrière et sont légèrement orientés vers le haut. Ils ont pour fonction principale de prendre appui sur le voile du palais, afin de le soutenir dans ses zones latérales, toujours dans le but d'augmenter le diamètre de l'orifice oropharyngé.

Quelle que soit la variante mise en oeuvre, cette forme de réalisation comprenant les deux bras métalliques en V coopérant avec les anneaux aboutit à la genèse d'une force constante, répondant au but recherché, à savoir, propulsion de la mandibule vers l'avant.

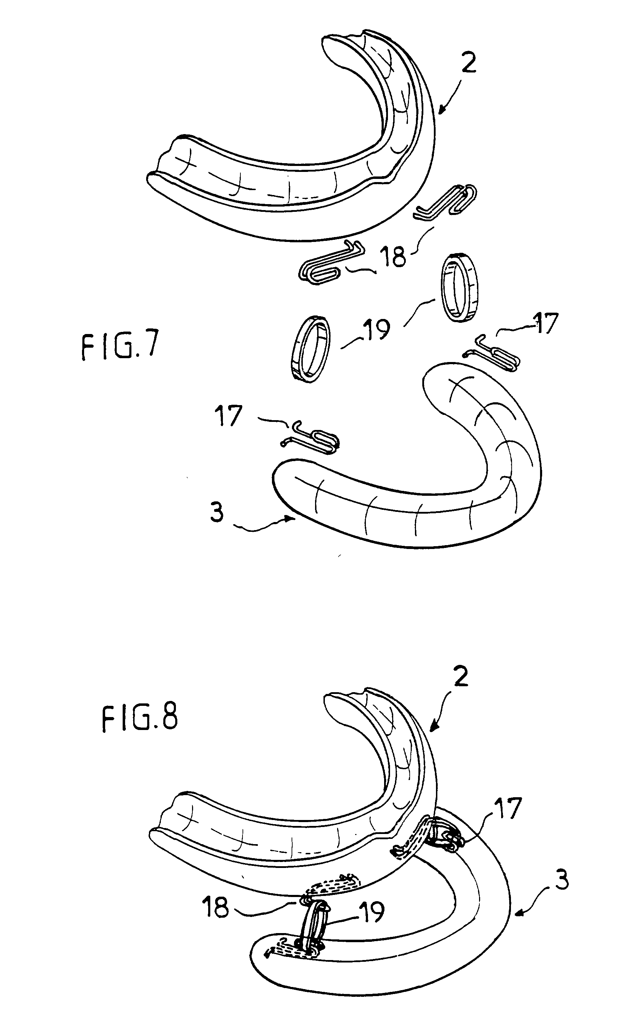

Dans une autre forme de réalisation de l'invention représentée en liaison avec les figures 7 et 8, les bras métalliques et les anneaux sont remplacés par des boudes élastiques et des crochets.

Ainsi, la coque inférieure (3) est munie au voisinage de ses deux extrémités, et plus précisément au niveau de chacune des deuxièmes prémolaires, d'un crochet (17), dirigé vers l'arrière.

Par ailleurs, la coque supérieure (2) est munie au voisinage de sa portion centrale, et plus précisément à l'aplomb de chacune des zones de jonction entre les incisives centrales et latérales, d'un crochet (18), sensiblement dirigé vers l'avant.

Les crochets (17) de la coque inférieure (3) sont reliés au crochets (18) de la coque supérieure (2) par des boucles élastiques (19), d'un type en soi bien connu en orthodontie. Leur force peut être adaptée en fonction de leur section et de leur diamètre. Compte tenu du positionnement des crochets, les boucles (19) génèrent une force, dont le point d'application est la machoire supérieure, induisant la propulsion vers l'avant de la mandibule, par l'intermédiaire de la coque inférieure.

Selon une autre variante non représentée, l'ensemble boucles élastiques - crochets est remplacé par des aimants permanents. Plus précisément, chacune des coques, respectivement supérieure (2) et inférieure (3) reçoit aux lieu et place des crochets des pastilles ou cylindres magnétiques, le pôle des éléments magnétiques mis en place au niveau de la coque inférieure et de la coque supérieure et se faisant face étant de natures opposées, c'est à dire pôle nord - pôle sud ou pôle sud - pôle nord, de telle sorte à générer une force magnétique atractive, propre à induire la propulsion vers l'avant de la mandibule.

Un des buts sous-tendus de l'invention est de permettre une adaptation facile et personnalisée de ce dispositif à tout type de morphologie buccale. Les deux coques sont réalisées en matière plastique biocompatible, tel que par exemple en polychlorure de vinyle, ou en tout type de matériau présentant les mêmes aptitudes au contact anatomique. Pour faciliter la mise en place et l'adaptation personnalisée de ce dispositif, chaque coque est formée de deux parties présentant des duretés différentes. L'extrados (21), ou zone extérieure de la gouttière est réalisé en un matériau d'une dureté Shore D située aux environs de 80, tandis que la partie intérieure (20) de la gouttière venant au contact de l'arcade (ou intrados), est réalisée en un matériau présentant une dureté Shore D aux alentours de 40. Ainsi, le formage de chacune des coques constitue une opération aisée, ne nécessitant aucun matériel spécialisé, tels que les dispositifs connus pour prise d'empreinte. En effet, une simple immersion dans de l'eau bouillante suffit à ramollir l'intrados (20), tout en gardant l'extrados (21) suffisamment rigide. Ainsi, l'application par simple pression sur l'arcade, de l'intrados (20) ramolli, lui donne une forme correspondante à la forme de l'arcade du patient.

On obtient de bons résultats lorsque la partie de l'extrados (21) présente une épaisseur de un millimètre tandis que l'intrados (20) possède une épaisseur de deux millimètres. On évite ainsi un phénomène de remplissage intersticiel particulièrement gênant pour les patients portant des prothèses dentaires.

En ce qui concerne les anneaux (4a, 4b) et les bras (13a, 13b), on utilise des fils d'acier respectivement de huit dizièmes et quatorze dixièmes de millimètres, d'acier 18/8 d'usage courant en orthodontie.

Dans une autre forme d'exécution personnalisée, le dispositif de l'invention peut être réalisé avec des moyens conventionnels. De manière connue, on réalise tout d'abord une prise d'empreinte du maxillaire et de la mandibule, en prenant soin, lors de la prise d'empreinte du maxillaire, de refouler le voile. On enregistre ensuite par un système approprié l'occlusion en position mandibule propulsée, sans apparition de douleurs d'articulation temporo-mandibulaire généralement de cinq millimètres avec une inocclusion de cinq millimètres. On monte les moulages ainsi obtenus en plâtre extra-dur sous vide, puis on monte sur articulateur dans la position définie par l'enregistrement précité.

On forme ensuite, notamment par thermoformage, les pièces maxillaire et mandibulaire suivant les contours à mi-hauteur coronaire de toutes les dents côté vestibulaire ou hauteur complète des dents en linguale. Deux lobes soutiennent le voile du palais le plus largement possible sans entraîner de réflexes nauséux.

Il ressort de ce qui précède que le dispositif conforme à l'invention présente de multiples avantages.On peut citer notamment la combinaison d'une propulsion de la mandibule combinée avec une possibilité de mouvements de latéralité. En outre, l'implantation des différents éléments assurant l'articulation est particulièrement bien adaptée à la morphologie de l'articulation temporo-mandibulaire. Enfin, la simplicité du dispositif permet son adaptation personnelle sans aucune intervention spécialisée.

Bien que l'invention soit décrite dans son application pour le traitement du ronfleur, avec ou sans apnée du sommeil, le dispositif peut également trouver un intérêt tout particulier dans le traitement orthopédique et orthodontique. On peut signaler notamment la possibilité de l'utiliser en tant qu'hyper-propulseur pour les sujets présentant une rétro-position mandibulaire. Par ailleurs, l'invention couvre également la variante dans laquelle les bras sont implantés sur la coque supérieure tandis que les anneaux sont implantés sur la coque inférieure de telle manière que la coque supérieure soit naturellement entraînée vers l'avant pour le traitement notamment de personnes prognathes.

## Revendications

1. Dispositif intra-buccal, comportant deux coques (2, 3) en matière plastique thermoformée, qui enveloppent respectivement la première, l'arcade supérieure, et la seconde l'arcade inférieure de la cavité buccale d'un patient et muni de moyens agissant au niveau desdites coques, propres à générer une force propulsive mandibulaire orientée selon la direction de la propulsion mandibulaire et dans le sens postéro-antérieur, **caractérisé en ce qu'**il autorise la rétropulsion mandibulaire.

2. Dispositif intra-buccal selon la revendication 1, **caractérisé en ce que** les coques (2, 3) sont articulées et peuvent être déboîtées l'une par rapport à l'autre.

3. Dispositif intra-buccal selon la revendication 1 ou 2, **caractérisé en ce que** les coques (2, 3) présentent entre elles une capacité de mouvement et d'élasticité.

4. Dispositif intra-buccal selon la revendication 2 ou 3, **caractérisé en ce que** les deux coques (2, 3) forment un ensemble articulé possédant une capacité de mouvement vers l'avant, sur les côtés, et de basculement naturel entre le maxillaire supérieur et la mandibule.

5. Dispositif intra-buccal selon l'une des revendications précédentes,
**caractérisé en ce que** lesdits moyens sont constitués :
- sur l'une des deux coques (2, 3), à l'aplomb des prémolaires, d'un anneau (4a, 4b) dépassant du plan d'occlusion,
- et sur l'autre coque (3, 2), d'une paire de bras libres (13a, 13b) dépassant du plan d'occlusion et parallèles à celui-ci, ces deux bras (13a, 13b) étant fixés sur la face linguale antérieure de la coque et étant dirigés selon la direction générale de la ligne d'occlusion (7), ces bras (13a, 13b) étant destinés à venir s'engager et à coulisser dans lesdits anneaux (4a, 4b) de manière à maintenir un décalage de la mandibule vers l'avant du maxillaire, tout en autorisant des mouvements de latéralité.

6. Dispositif intra-buccal selon la revendication 5, **caractérisé en ce que** les bras (13a, 13b) ont un effet de ressort permettant de maintenir la propulsion de la mandibule.

7. Dispositif intra-buccal selon la revendication 5 ou 6, **caractérisé en ce que** l'extrémité libre des bras (14a, 14b) est incurvée vers l'espace vestibulaire.

8. Dispositif intra-buccal selon l'une des revendications 5 à 7, **caractérisé en ce que** chacun des anneaux (4a, 4b) présente une forme elliptique et est disposé entre la première et la deuxième prémolaire.

9. Dispositif intra-buccal selon l'une des revendications 5 à 8, **caractérisé en ce que** chaque anneau est orthogonal à la ligne d'occlusion (7).

10. Dispositif intra-buccal selon l'une des revendications 5 à 9, **caractérisé en ce que** les bras (13a, 13b) forment les branches d'une pièce unique (8) en V, dirigées vers l'arrière de la bouche, dont les extrémités libres (14a, 14b) sont disposées à l'aplomb de la première molaire.

11. Dispositif intra-buccal selon l'une des revendications 5 à 10, **caractérisé en ce que** les anneaux (4a, 4b) et les bras libres (8) sont réalisés en acier inoxydable.

12. Dispositif intra-buccal selon l'une des revendications 1 à 4, **caractérisé en ce que** lesdits moyens sont constitués d'une part, de crochets (17, 18) fixés sur lesdites coques (2, 3), destinés à recevoir des boucles élastiques (19) tendant à propulser la mandibule vers l'avant.

13. Dispositif intra-buccal selon la revendication 12, **caractérisé en ce que** les crochets (17) de la coque inférieure (3) sont fixés au voisinage de ses extrémités, et notamment au niveau de la deuxième prémolaire, alors que les crochets (18) de la coque supérieure (2) sont fixés au voisinage de sa portion centrale, et notamment à l'aplomb de chacune des zones de jonction entre les incisives centrales et latérales.

14. Dispositif infra-buccal selon l'une des revendications 1 à 4, **caractérisé en ce que** lesdits moyens sont constitués d'éléments magnétiques fixés sur lesdites coques (2, 3) et orientés de telle sorte à générer une force magnétique attractive, propre à induire la propulsion de la mandibule vers l'avant.

15. Dispositif intra-buccal selon l'une des revendications précédentes, **caractérisé en ce que** chaque coque (2, 3) présente un extrados (21) réalisé en un matériau thermoformable semi-rigide, et un intrados (20) réalisé en un matériau thermoformable plus souple.

16. Dispositif intra-buccal selon l'une des revendications précédentes, **caractérisé en ce que** la coque supérieure (2) présente à ses deux extrémités postérieures deux prolongements (16a, 16b) s'étendant vers l'arrière et destinés à servir de soutènement aux portions latérales du voile du palais.

17. Dispositif intra-buccal selon l'une des revendications précédentes, **caractérisé en ce que** la coque inférieure (3) présente des oreillettes (15a, 15b) disposées à proximité des extrémités postérieures de la coque et orientées vers l'intérieur en direction l'un de l'autre, ces lobes étant destinés à prendre appui sur les parties latérales de la langue pour empêcher son soulèvement.

## Patentansprüche

1. Intraorale Vorrichtung, zwei Schalen (2, 3) aus wärmegeformtem Kunststoff umfassend, von denen die erste den oberen Zahnbogen und die zweite den unteren Zahnbogen der Mundhöhle eines Patienten umhüllen, und die mit Einrichtungen versehen ist, die auf die genannten Schalen einwirken und fähig sind, eine auf den Unterkiefer vorwärtstreibende Kraft in der Richtung der Vorwärtsbewegung des Unterkiefers, und in dem von hinten nach vorn verlaufenden Sinne zu erzeugen,
**dadurch gekennzeichnet,**
**dass** sie das Zurückziehen des Unterkiefers zulässt.

2. Intraorale Vorrichtung nach Anspruch 1,
**dadurch gekennzeichnet, dass** die Schalen (2, 3) gelenkig verbunden sind und auseinandergenommen werden können.

3. Intraorale Vorrichtung nach Anspruch 1 oder 2, **dadurch gekennzeichnet, dass** die Schalen (2,3) untereinander Bewegungsfähigkeit und Elastizität aufweisen.

4. Intraorale Vorrichtung nach Anspruch 2 oder 3, **dadurch gekennzeichnet, dass** die beiden Schalen (2,3) ein gelenkiges System bilden, das die Fähigkeit für Bewegungen nach vorn, auf die Seiten und des natürlichen Schwenken zwischen Oberkiefer und Unterkiefer besitzt.

5. Intraorale Vorrichtung nach einem der vorangehenden Ansprüche, **dadurch gekennzeichnet, dass** die genannten Einrichtungen gebildet werden:
- an einer der beiden Schalen (2, 3) in Höhe der Prämolarzähne, durch eine Öse (4a, 4b), die aus der Okklusionsebene vorsteht,
- an der anderen Schale (3, 2), durch ein Paar freier Arme (13a, 13b), aus der Okklusionsebene vorstehend und zu dieser parallel, wobei diese beiden Arme (13a, 13b) an der hinteren Zungenfläche der Schale befestigt sind, entsprechend der Hauptrichtung der Okklusionslinie (7) ausgerichtet sind und dazu bestimmt sind, in die genannten Ösen (4a, 4b) gesteckt zu werden und in ihnen zu gleiten, um in Bezug auf den Oberkiefer eine Verschiebung des Unterkiefers nach vorn aufrechtzuerhalten und dabei seitliche Bewegungen zuzulassen.

6. Intraorale Vorrichtung nach Anspruch 5,
**dadurch gekennzeichnet, dass** die Arme (13a, 13b) eine Federwirkung haben, die die Vorwärtsbewegung des Unterkiefers aufrechtzuerhalten erlaubt.

7. Intraorale Vorrichtung nach Anspruch 5 oder 6, **dadurch gekennzeichnet, dass** das freie Ende der Armen (14a, 14b) in Richtung Vorhofraum gekrümmt ist.

8. Intraorale Vorrichtung nach einem der Ansprüche 5 bis 7, **dadurch gekennzeichnet, dass** jede der Ösen (4a, 4b) eine elliptische Form aufweist und zwischen dem ersten und zweiten Prämolarzahn angeordnet ist.

9. Intraorale Vorrichtung nach einem der Ansprüche 5 bis 8, **dadurch gekennzeichnet, dass** jede Öse rechtwinklig zur Okklusionslinie (7) ausgerichtet ist.

10. Intraorale Vorrichtung nach einem der Ansprüche 5 bis 9, **dadurch gekennzeichnet, dass** die beiden Arme (13a, 13b) die Zweige eines einzigen, gegen den hinteren Teil des Mundes gerichteten, V-förmigen Teils sind, dessen freie Enden (14a, 14b) in Höhe des ersten Molarzahns angeordnet sind.

11. Intraorale Vorrichtung nach einem der Ansprüche 5 bis 10, **dadurch gekennzeichnet, dass** die Ösen (4a, 4b) und die freien Arme (8) aus nichtoxidierendem Stahl sind.

12. Intraorale Vorrichtung nach einem der Ansprüche 1 bis 4, **dadurch gekennzeichnet, dass** die genannten Einrichtungen einerseits durch Haken (17, 18) gebildet werden, die an den genannten Schalen (2, 3) befestigt sind und dazu bestimmt sind, elastische Ringe (19) aufzunehmen, die bestrebt sind, den Unterkiefer nach vorn zu ziehen.

13. Intraorale Vorrichtung nach Anspruch 12,
**dadurch gekennzeichnet, dass** die Haken (17) der unteren Schale (3) in der Nähe ihrer Enden befestigt sind, insbesondere in Höhe des zweiten Prämolarzahns, während die Haken (18) der oberen Schale (2) in der Nähe ihres Mittelteil befestigt sind, insbesondere in Höhe von jeder der Übergangszonen zwischen den zentralen und lateralen Schneidezähnen.

14. Intraorale Vorrichtung nach einem der Ansprüche 1 bis 4, **dadurch gekennzeichnet, dass** die genannten Einrichtungen durch magnetische Elemente gebildet werden, die an den genannten Schalen (2, 3) befestigt sind und so ausgerichtet sind, dass sie eine magnetische Anziehungskraft erzeugen, die dazu bestimmt ist, die Vorwärtsbewegung des Unterkiefers nach vorn zu führen.

15. Intraorale Vorrichtung nach einem der vorangehenden Ansprüche, **dadurch gekennzeichnet, dass** jede Schale (2, 3) eine äußere Wölbfläche (21) aus einem halbsteifen thermoformbaren Material und eine innere Wölbfläche (20) aus einem nachgiebigeren thermoformbaren Material aufweist.

16. Intraorale Vorrichtung nach einem der vorangehenden Ansprüche, **dadurch gekennzeichnet, dass** die obere Schale (2) an ihren beiden hinteren Enden zwei Verlängerungen (16a, 16b) aufweist, die sich nach hinten erstrecken und dazu bestimmt sind, den seitlichen Teilen des Gaumens als Stütze zu dienen.

17. Intraorale Vorrichtung nach einem der vorangehenden Ansprüche, **dadurch gekennzeichnet, dass** die untere Schale (3) Ohren bzw. Lappen (15a, 15b) aufweist, die in der Nähe der hinteren Enden der Schale angeordnet und nach innen gerichtet sind und sich gegenüberstehen, wobei diese Lappen dazu bestimmt sind, sich auf den seitlichen Teilen der Zunge abzustützen, um zu verhindern, dass diese angehoben wird.

## Claims

1. Intrabuccal device comprising two shells (2,3) made of thermoformed plastic material the first of which respectively covers the superior arch, and the second of which covers the inferior arch of a patient's oral cavity, and provided with means that act at the said shells and can generate a mandibular propulsive force oriented in the direction of the mandibular propulsion and in the posteroanterior sense, **characterised in that** it allows mandibular retropropulsion.

2. Intrabuccal device according to claim 1, **characterised in that** the shells (2, 3) are articulated to and disconnectable from one another.

3. Intrabuccal device according to claim 1 or 2, **characterised in that** the shells (2, 3) have a capacity for movement and elasticity between them.

4. Intrabuccal device according to claim 2 or 3, **characterised in that** the two shells (2, 3) form an articulated unit which has a capacity for movement forwards, to the sides, and of natural tilting between the upper maxilla and the mandible.

5. Intrabuccal device according to one of the preceding claims, **characterised in that** the said means comprise:
- on one of the two shells (2,3), above the premolars, a ring (4a, 4b) that projects beyond the occlusal plane;
- and on the other shell (3, 2), a pair of free arms (13a, 13b) that project beyond the occlusal plane and are parallel to it, these two arms (13a, 13b) being fastened on the anterior lingual face of the shell and being oriented in the general direction of the occlusion line (7), these arms (13a, 13b) being intended to engage and slide in the said rings (4a, 4b) so as to keep a shift of the mandible to the front of the maxilla, while allowing lateral movements.

6. Intrabuccal device according to claim 5, **characterised in that** the arms (13a, 13b) have a spring effect that allows to keep the propulsion of the mandible.

7. Intrabuccal device according to claim 5 or 6, **characterised in that** the free end of the arms (14a, 14b) is curved towards the vestibular space.

8. Intrabuccal device according to one of claims 5 to 7, **characterised in that** each of the rings (4a, 4b) has an elliptical shape and is placed between the first and second premolars.

9. Intrabuccal device according to one of claims 5 to 8, **characterised in that** each ring is orthogonal to the occlusion line (7).

10. Intrabuccal device according to one of claims 5 to 9, **characterised in that** the arms (13a, 13b) form the branches of a single V-shaped piece (8) directed towards the rear of the mouth and the free ends (14a, 14b) of which are placed above the first molar.

11. Intrabuccal device according to one of claims 5 to 10, **characterised in that** the rings (4a, 4b) and the free arms (8) are made of stainless steel.

12. Intrabuccal device according to one of claims 1 to 4, **characterised in that** the said means comprise, on the one hand, hooks (17, 18) fastened on the said shells (2, 3) and intended to receive elastic loops (19) that tend to propel the mandible forwards.

13. Intrabuccal device according to claim 12, **characterised in that** the hooks (17) of the lower shell (3) are fastened adjacent to its ends, and particularly at the second premolar, whereas the hooks (18) of the upper shell (2) are fastened adjacent to its central portion, and particularly above each of the junction regions between the central and lateral incisors.

14. Intrabuccal device according to one of claims 1 to 4, **characterised in that** the said means comprise magnetic elements fastened on the said shells (2,3) and oriented in such a way as to generate an attractive magnetic force that can induce the propulsion of the mandible forwards.

15. Intrabuccal device according to one of the preceding claims,
**characterised in that** each shell (2,3) has an top side (21) made of a semirigid thermoformable material, and a bottom side (20) made of a more flexible thermoformable material.

16. Intrabuccal device according to one of the preceding claims,
**characterised in that**, at its two posterior ends, the upper shell (2) has two extensions (16a, 16b) which project backwards and are intended to serve as a support for the lateral portions of the soft palate.

17. Intrabuccal device according to one of the preceding claims,
**characterised in that** the lower shell (3) has brackets (15a, 15b) placed in proximity to the posterior ends of the shell and oriented inwards in the direction of one another, these lobes being intended to bear on the lateral parts of the tongue in order to prevent it from rising.
